(19) Europäisches Patentamt
European Patent Office
Office européen des brevets

(11) **EP 1 544 667 B1**

(12) **FASCICULE DE BREVET EUROPEEN**

(45) Date de publication et mention
de la délivrance du brevet:
**29.04.2009 Bulletin 2009/18**

(51) Int Cl.:
**G02B 27/58** *(2006.01)* **G06T 5/00** *(2006.01)*

(21) Numéro de dépôt: **04292895.2**

(22) Date de dépôt: **06.12.2004**

(54) **Complément fréquentiel d'images acquises par un dispositif d'acquisition à synthèse d'ouverture optique dilué, par combinaison d'images fréquentiellement complémentaires**

Frequenzmässige Vervollständigung von Bildern, die mit einer Apparatur mit verdünnter synthetischer, optischer Apertur aufgenommen wurden, durch Kombination von Bildern, welche sich im Frequenzbereich ergänzen

Frequential completion of images acquired with a thinned synthetic aperture optical device by combination of images being complementary in the frequency domain

(84) Etats contractants désignés:
**AT BE BG CH CY CZ DE DK EE ES FI FR GB GR HU IE IS IT LI LT LU MC NL PL PT RO SE SI SK TR**

(30) Priorité: **15.12.2003 FR 0314753**

(43) Date de publication de la demande:
**22.06.2005 Bulletin 2005/25**

(73) Titulaire: **THALES**
**92200 Neuilly sur Seine (FR)**

(72) Inventeur: **Blanc, Philippe**
**06140 Vence (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 5 905 591**

- **HARVEY J E ET AL: "PERFORMANCE CHARACTERISTICS OF PHASED ARRAY AND THINNED APERTURE OPTICAL TELESCOPES" OPTICAL ENGINEERING, SOC. OF PHOTO-OPTICAL INSTRUMENTATION ENGINEERS. BELLINGHAM, US, vol. 27, no. 9, 1 septembre 1988 (1988-09-01), pages 762-768, XP000000358 ISSN: 0091-3286**
- **LUCKE R L: "Fundamentals of wide-field sparse-aperture imaging" IEEE AEROSPACE CONFERENCE PROCEEDINGS, BIG SKY, MT, USA, 10-17 MARCH,, vol. 3, 20 mars 2001 (2001-03-20), pages 1401-1419, XP010548367 PISCATAWAY, NJ, USA**
- **PARENTI R R: "Fourier-space image restoration" LINCOLN LABORATORY JOURNAL, SPRING-SUMMER 1995, 1995, XP008033196 LICOLN LAB, MIT, USA**

EP 1 544 667 B1

**Description**

L'invention concerne le domaine de l'acquisition d'images, et plus précisément l'acquisition d'images à l'aide d'un dispositif d'acquisition à synthèse d'ouverture optique.

Comme le sait l'homme de l'art, l'acquisition de certaines images peut nécessiter l'utilisation d'instruments d'observation de grands, voire très grands, diamètres, ou la mise en oeuvre d'interféromètres imageurs. Dans ce dernier cas, l'instrument d'observation constitue ce que l'on appelle un dispositif d'acquisition à synthèse d'ouverture optique, dont la pupille est composée de plusieurs sous-pupilles chacune collectant une partie du front d'onde incident ; ce dernier étant recombiné de manière cohérente de sorte que le dispositif d'acquisition délivre des images dont la résolution spatiale dépend à la fois des diamètres des télescopes et de leur espacement.

Il est ici rappelé que la résolution spatiale d'un instrument optique d'observation, hors considération de la détection, est en rapport avec sa fréquence de coupure optique, définie par la plus haute fréquence spatiale qu'il perçoit, au sens de Fourier.

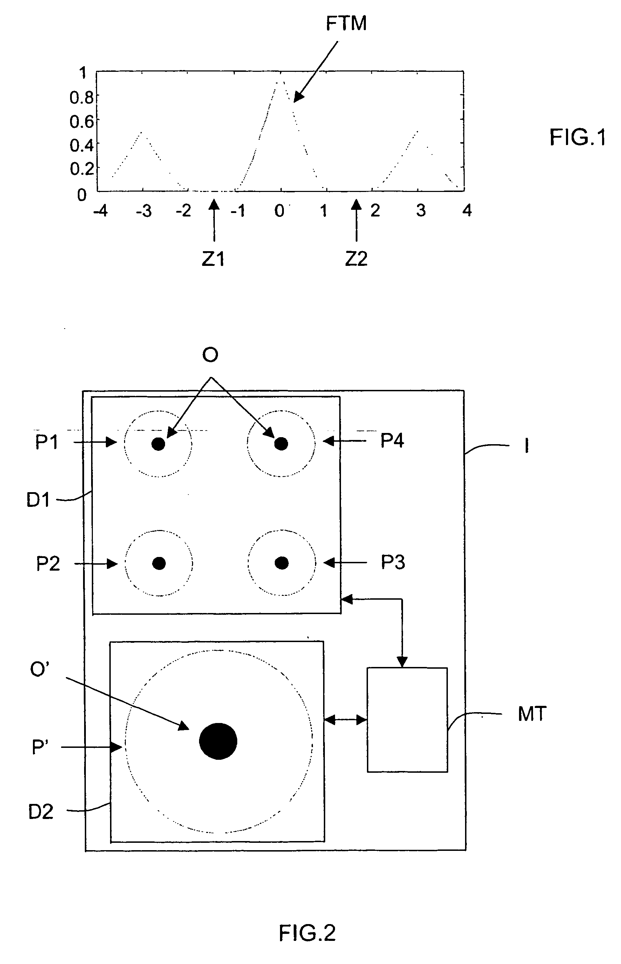

Lorsque l'on cherche à obtenir une résolution spatiale élevée mais que le nombre de télescopes, les dimensions des télescopes et leur espacement sont limités, on définit inévitablement un dispositif d'acquisition à synthèse d'ouverture optique de type « dilué », c'est-à-dire dont la fonction de transfert de modulation (ou FTM) présente une ou plusieurs plages d'annulation de fréquences spatiales (Z1, Z2) avant sa fréquence spatiale de coupure, comme illustré par une coupe de la FTM représentée figure 1.

On entend ici par « plage d'annulation de fréquences spatiales », aussi bien une plage sur laquelle la FTM présente une valeur nulle ou quasiment nulle, qu'une plage sur laquelle la FTM présente une valeur faible compte tenu du bruit de mesure.

Il est ici rappelé que la FTM d'un instrument d'observation peut être définie comme le module de la transformée de Fourier de sa réponse impulsionnelle. Par ailleurs, il est rappelé que, pour une résolution spatiale donnée, la qualité d'une image ne peut être optimale que lorsque la FTM de l'instrument d'observation qui acquiert l'image ne comporte pas de plage d'annulation de fréquences spatiales. En d'autres termes, pour une même fréquence de coupure optique, plus une FTM comprend de fréquences spatiales manquantes moins la qualité image associée est bonne.

Pour obtenir une FTM sans plage d'annulation jusqu'à la fréquence spatiale de coupure à l'aide d'un dispositif d'acquisition à synthèse d'ouverture optique, l'espacement deux à deux entre ses sous-pupilles d'entrée doit être inférieur à la somme des rayons desdites sous-pupilles d'entrée. En d'autres termes, l'obtention d'une FTM sans plage d'annulation impose l'utilisation d'une pupille composite compacte. Or, cela dégrade le rapport encombrement/ résolution spatiale, et donc limite l'intérêt de l'interférométrie en terme d'acquisition d'images de résolution élevée, notamment dans le cas d'observations spatiales dirigées vers l'espace comme vers la terre.

L'invention a donc pour but d'améliorer la situation dans le cas d'une acquisition d'images à l'aide d'un dispositif d'acquisition à synthèse d'ouverture optique.

Elle propose à cet effet une installation d'acquisition d'images comprenant :

- au moins un premier dispositif d'acquisition à synthèse d'ouverture optique, à résolution spatiale choisie et comportant une fonction de transfert de modulation (FTM) présentant une ou plusieurs plages d'annulation de fréquences spatiales et capable de délivrer des premières données d'image représentatives d'une zone d'observation, selon des fréquences spatiales en dehors des plages d'annulation,
- au moins une source délivrant des secondes données d'image dont la résolution spatiale est inférieure à celle du premier dispositif et qui sont représentatives sensiblement de la zone d'observation, selon des fréquences spatiales qui appartiennent au moins à une partie au moins de l'une au moins des plages,
- des moyens de traitement chargés de combiner les premières et secondes données d'image de manière à délivrer une image de la zone d'observation complétée en composantes de fréquences spatiales.

En d'autres termes, l'invention propose d'enrichir (ou de compléter au moins partiellement) en composantes de fréquences spatiales, l'image d'une zone délivrée par un premier dispositif d'acquisition à synthèse d'ouverture optique, de type dilué, à l'aide de fréquences spatiales complémentaires contenues dans une image, sensiblement de cette même zone, délivrée par une source pouvant être par exemple une base de données d'images pré-existantes ou un second dispositif d'acquisition d'images.

De préférence, la source délivre des secondes données d'image selon des fréquences spatiales qui englobent au moins chaque plage d'annulation afin que les moyens de traitement délivrent une image de la zone d'observation complète en terme de fréquences spatiales.

L'installation selon l'invention peut comporter d'autres caractéristiques qui pourront être prises séparément ou en combinaison, et notamment :

- les moyens de traitement peuvent être chargés de filtrer par déconvolution les premières et/ou secondes données d'image et de les combiner, en tenant compte de leurs niveaux de FTM et/ou de leurs niveaux de bruit. Il est important de noter que la déconvolution peut être effectuée avant la combinaison ou bien après,

- les moyens de traitement peuvent être chargés d'extraire des premières et/ou secondes données d'image celles qui correspondent à une basse résolution spatiale, de manière à faire correspondre géométriquement les images associées avant de procéder au filtrage et/ou à la combinaison,
- le second dispositif d'acquisition d'images présente par exemple une résolution spatiale moins fine que celle du premier dispositif d'acquisition d'images,
- le second dispositif d'acquisition d'images peut être, par exemple, de type multispectral,
- le premier dispositif d'acquisition d'images peut être, par exemple, de type panchromatique,
- le premier dispositif d'acquisition d'images peut comprendre au moins deux télescopes définissant chacun une sous-pupille d'entrée,
- les premier et second dispositifs d'acquisition d'images peuvent être implantés sensiblement en un même lieu, comme par exemple sur une même plateforme spatiale, comme par exemple un satellite d'observation,
- en variante, les premier et second dispositifs d'acquisition peuvent être implantés sur des engins spatiaux différents communiquant tous les deux avec les moyens de traitement,
- les moyens de traitement peuvent être installés sur un engin spatial ou bien dans une station terrestre (dans ce cas ils communiquent par voie d'ondes avec chaque engin spatial d'observation).

D'autres caractéristiques et avantages de l'invention apparaîtront à l'examen de la description détaillée ci-après, et des dessins annexés, sur lesquels :

- la figure 1 illustre de façon schématique une coupe d'une fonction de transfert de modulation (FTM), présentant deux plages d'annulation de fréquences spatiales (Z1, Z2), en fonction de la fréquence spatiale,
- la figure 2 illustre de façon schématique un exemple de réalisation d'une installation d'acquisition d'images selon l'invention,
- la figure 3 illustre de façon schématique la carte bidimensionnelle des fréquences spatiales perçues par le premier dispositif d'acquisition (D1) de l'installation de la figure 2, suivant un contraste normalisé à un (1) pour la fréquence nulle (les fréquences spatiales sont normalisées par la fréquence d'échantillonnage de D1, définie comme l'inverse du pas d'échantillonnage),
- la figure 4 illustre de façon schématique la carte bidimensionnelle des fréquences spatiales (en conservant la même normalisation que celle de la figure 3) perçues par le second dispositif d'acquisition (D2) de l'installation de la figure 2, suivant un contraste normalisé à un (1) pour la fréquence nulle.

Les dessins annexés pourront non seulement servir à compléter l'invention, mais aussi contribuer à sa définition, le cas échéant.

L'invention a pour objet de permettre l'acquisition d'images de résolution élevée, voire haute, et de bonne qualité à partir d'un dispositif d'acquisition à synthèse d'ouverture optique de type dilué.

On se réfère tout d'abord à la figure 2 pour décrire un exemple de réalisation d'une installation d'acquisition d'images I permettant de mettre en oeuvre l'invention.

Une installation selon l'invention I comprend tout d'abord au moins un premier dispositif d'acquisition à synthèse d'ouverture optique (ou SOO) D1 chargé d'observer une zone choisie afin de délivrer des premières données d'image représentatives de cette zone. Les premières données d'image sont préférentiellement des données d'image en luminance dont la transformée de Fourier présente, comme on le verra plus loin, des composantes fréquentielles nulles avant la fréquence de coupure du premier dispositif d'acquisition D1. Il comprend ici quatre télescopes, matérialisés par leurs pupilles d'entrée P1 à P4 et par les obturations centrales O associées. Bien entendu, le nombre de télescopes du premier dispositif D1 peut être différent de quatre. Il suffit en effet qu'il soit supérieur ou égal à deux.

Ces quatre télescopes, très précisément positionnés, constituent la pupille composite de l'interféromètre imageur.

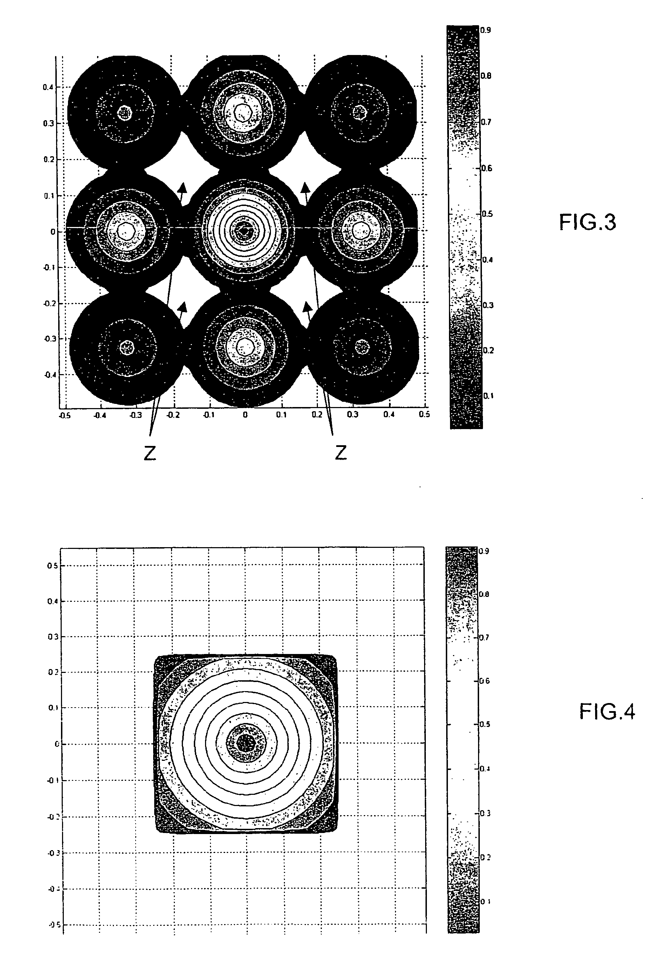

Par ailleurs, le premier dispositif d'acquisition D1 est du type dit dilué. Il présente une fonction de transfert de modulation (ou FTM) comportant par exemple, comme illustré sur la figure 3, quatre plages d'annulation de fréquences spatiales Z avant sa fréquence spatiale de coupure. La figure 3 illustre plus précisément la carte bidimensionnelle (2D) des fréquences spatiales, perçues par le premier dispositif d'acquisition D1, normalisées par sa fréquence d'échantillonnage (inverse du pas d'échantillonnage), ici choisie égale à deux fois la fréquence de coupure optique du premier dispositif D1. Pour les fréquences spatiales perçues, la figure 3 représente une dizaine de courbes de niveaux de la FTM, mesure du contraste, normalisé à un (1) pour la fréquence nulle, avec lequel le premier dispositif D1 perçoit les fréquences spatiales. La bande placée sur la partie droite de la figure 3 représente l'échelle du contraste normalisé.

Le premier dispositif d'acquisition D1 délivre par exemple des images de haute résolution spatiale, suivant un pas d'échantillonnage de deux mètres. Il perçoit donc de hautes fréquences spatiales. Il perçoit également des fréquences spatiales basses. Ici les plages d'annulation Z sont situées dans des fréquences spatiales intermédiaires comprises entre les hautes et basses fréquences spatiales.

Comme indiqué dans la partie introductive, en raison de ces plages d'annulation Z, les images délivrées par le premier dispositif D1 ne comportent pas toutes les composantes de fréquences spatiales inférieures à sa fréquence de coupure. Par conséquent, ces images sont certes de haute résolution, mais leur qualité n'est pas bonne.

Pour remédier à cet inconvénient majeur, l'installation I selon l'invention comporte, en complément du premier dispositif D1, au moins une source délivrant des secondes données d'image dont la résolution spatiale est inférieure à celle du premier dispositif d'acquisition D1 et qui sont représentatives sensiblement de la zone qu'observe ledit premier dispositif d'acquisition D1. Ces secondes données d'images sont préférentiellement du même type que les premières données d'image, c'est-à-dire des données d'image en luminance. En outre, ces secondes données d'image correspondent à des fréquences spatiales qui appartiennent au moins à une partie au moins de l'une au moins des plages d'annulation Z de la FTM du premier dispositif d'acquisition D1.

Cette source peut être une base de données d'images pré-existantes. Mais, comme illustré sur la figure 2 elle peut également se présenter sous la forme d'un second dispositif d'acquisition d'images D2 présentant une résolution spatiale inférieure à celle du premier dispositif d'acquisition D1. Un tel second dispositif D2 est par exemple constitué d'un unique télescope, matérialisé par sa pupille d'entrée P' et l'obturation O' associée.

Le second dispositif d'acquisition D2 délivre par exemple des images de résolution spatiale dégradée par rapport au premier dispositif d'acquisition D1, ici d'un facteur deux. En raison de sa configuration, sa FTM ne présente pas de plage d'annulation de fréquences spatiales. Il est cependant important de noter que la FTM du second dispositif d'acquisition D2 pourrait présenter une ou plusieurs plages d'annulation de fréquences spatiales, dès lors qu'elles diffèrent au moins en partie de celles du premier dispositif d'acquisition D1. En d'autres termes, le second dispositif d'acquisition D2 peut être également à synthèse d'ouverture optique dilué.

Préférentiellement et comme illustré sur la figure 4, la FTM du second dispositif d'acquisition D2 ne présente pas de plage d'annulation de fréquences spatiales et englobe entièrement les plages d'annulation de la FTM du premier dispositif d'acquisition D1. La figure 4 illustre plus précisément la carte bidimensionnelle (2D) des fréquences spatiales perçues par le second dispositif d'acquisition D2 et indique, pour ces dernières, le contraste correspondant (*i.e.* la FTM) normalisé à un (1) pour la fréquence nulle. La bande placée sur la partie droite de la figure 4 représente l'échelle du contraste normalisé.

Il est encore plus préférable, également comme illustré sur la figure 4, que le second dispositif d'acquisition D2 perçoive le plus possible de fréquences spatiales en commun avec le dispositif d'acquisition D1, en deçà des plages d'annulation Z, c'est-à-dire, ici, vers les basses fréquences spatiales.

Le premier dispositif d'acquisition D1 et le second dispositif d'acquisition D2 sont, dans l'exemple illustré sur la figure 2, regroupés au sein d'une même plate-forme. Cette plate-forme est par exemple installée sur un engin spatial, comme par exemple un satellite d'observation ou une station spatiale en orbite autour de la terre (ou de tout autre astre) et chargé d'observer la terre ou bien l'espace.

Dans ce cas, les premier D1 et second D2 dispositifs d'acquisition peuvent assez facilement acquérir le même champ, mais suivant des résolutions spatiales et des sensibilités spectrales différentes (domaine de longueurs d'onde d'observation). Par exemple, le premier dispositif d'acquisition D1 acquiert le « paysage » en mode panchromatique, tandis que le second dispositif d'acquisition D2 acquiert ce même paysage en mode multispectral et avec une résolution spatiale moins bonne. Idéalement, la définition des gabarits spectraux du second dispositif d'acquisition D2 est telle que leur somme (ou celle d'un sous-ensemble), éventuellement pondérée, est exactement égale au gabarit spectral du premier dispositif d'acquisition D1. Il est ici rappelé que la luminance perçue par un capteur est la résultante de l'intégration de la luminance spectrale (fonction de la longueur d'onde) pondérée par la sensibilité spectrale (gabarit spectral) de l'instrument d'acquisition.

Mais, les premier D1 et second D2 dispositifs d'acquisition pourraient être installés sur des engins spatiaux différents dès lors qu'ils observent sensiblement la même zone.

Dans ce cas, le second dispositif d'acquisition D2 est par exemple un instrument d'observation à champ large permettant une observation (ou surveillance) globale d'une zone étendue à moyenne ou basse résolution spatiale, et il transmet au premier dispositif d'acquisition D1, par voie d'ondes, l'emplacement de zones d'intérêt de champ nettement plus restreint à imager avec une résolution plus importante.

On peut également envisager que les premier D1 et second D2 dispositifs d'acquisition soient installés dans une même station terrestre ou bien dans des stations terrestres différentes dès lors qu'ils observent sensiblement la même zone. Par ailleurs, lorsque la source est une base de données d'images de basse ou moyenne résolution spatiale, celle-ci est préférentiellement implantée dans une station terrestre, le premier dispositif d'acquisition D1 étant alors installé soit sur un engin spatial, soit dans une station terrestre, éventuellement la même que celle où se trouve installée la base de données.

L'installation selon l'invention comporte enfin un module de traitement MT chargé de combiner les premières et secondes données d'image délivrées respectivement par le premier dispositif d'acquisition D1 et la source (ici le second dispositif d'acquisition D2), afin de délivrer une image de la zone d'observation qui est enrichie en composantes de fréquences spatiales.

Dans l'exemple illustré sur la figure 2, le module de traitement MT est installé dans le même engin spatial que les premier D1 et second D2 dispositifs d'acquisition, auxquels il est donc raccordé physiquement, éventuellement par l'intermédiaire d'équipements électroniques, électriques ou optiques. Mais, le module de traitement MT peut être séparé des premier D1 et second D2 dispositifs d'acquisition. Cela peut même s'avérer avantageux pour des questions de consommation énergétique, voire nécessaire si les capacités de traitement et de stockage ne sont pas suffisantes. Dans ce cas, le module de traitement MT est installé dans une station terrestre et reçoit des premières et secondes données d'image de l'engin spatial, par voie d'ondes.

Le module de traitement MT peut dans certaines circonstances très favorables n'avoir qu'à combiner, c'est-à-dire sommer (ou fusionner), les contributions fréquentielles (au sens de Fourier) des images délivrées par les premier D1 et second D2 dispositifs d'acquisition.

Cela nécessite cependant que les images délivrées par les premier D1 et second D2 dispositifs d'acquisition correspondent sensiblement à une même zone, soient concomitantes (ou quasi-concomitantes) et compatibles en termes de domaines de longueurs d'onde d'observation, et se correspondent géométriquement, c'est-à-dire qu'elles soient sensiblement à la même échelle et recalés géométriquement.

Pour obtenir une qualité image optimale, cela nécessite également que les FTM des premier D1 et second D2 dispositifs d'acquisition soient complémentaires et sans recouvrement de leur support, et que les niveaux de bruit des images délivrées par les premier D1 et second D2 dispositifs d'acquisition soient comparables.

En effet, les images contiennent toujours des informations basses fréquences qui lorsqu'elles sont combinées entraînent une légère dégradation de la qualité image. Par conséquent, une simple sommation des contributions fréquentielles des images délivrées par les premier D1 et second D2 dispositifs d'acquisition aboutit certes à une amélioration de la qualité image, mais pas une qualité image optimale.

Lorsque les niveaux de bruit ne sont pas comparables et/ou que les FTM ne sont pas exactement complémentaires, le module de traitement MT doit donc effectuer un filtrage. Les niveaux de bruit et les niveaux de FTM sont habituellement connus. Ce filtrage consiste plus précisément à déconvoluer les premières et/ou secondes données d'image compte tenu de leurs niveaux de FTM et/ou de leurs niveaux de bruit respectifs.

Lorsque les deux images ont été traitées pour correspondre sensiblement au même domaine de longueurs d'onde d'observation et corrigées géométriquement (recalées entre elles et mises à l'échelle la plus fine), on peut les définir par deux fonctions (notées $m_1$ et $m_2$) qui correspondent à la convolution de la luminance provenant de la zone d'observation o par leur réponse impulsionnelle (respectivement $h_1$ et $h_2$) à laquelle s'ajoute un bruit de mesure (respectivement $b_1$ et $b_2$, supposés indépendants entre eux) :

$$m_1 = h_1 {}^* o + b_1$$

$$m_2 = h_2 {}^* o + b_2$$

L'opérateur * désigne ici la convolution.

La déconvolution cherche à estimer l'objet o à partir des observations conjointes $m_1$ et $m_2$.

On détermine alors les filtres de déconvolution $g_1$ et $g_2$ tels que l'estimateur ô composé de la somme des deux images convoluées respectivement par $g_1$ et $g_2$ soit le-plus proche possible de o. Choisir le critère numérique permettant de définir le degré d'erreur entre ô et o conduit à des méthodes de déconvolution différentes.

On choisit par exemple comme mesure de l'erreur entre ô et o l'erreur quadratique moyenne. $g_1$ et $g_2$ sont donc tels que $E(\|ô - o\|^2)$ est minimale.

E désigne ici l'espérance mathématique, et $\|u\|$ désigne la norme euclidienne de l'image u.

Cela revient à déterminer le filtre de Wiener à deux composantes correspondant aux deux FTM complémentaires. Le filtre de Wiener est la méthode de filtrage linéaire inverse optimale au sens de l'erreur quadratique moyenne. Un tel filtre est notamment décrit dans le document « Signal Analysis », McGraw-Hill International Editions, Electrical & Electronical Engineering Series, Singapore, Malaysia, ISBN 0-07-048460-0, 431 pp., Papoulis A., 1987.

Lorsque les images d'une même zone sont concomitantes et cohérentes vis à vis du domaine des longueurs d'onde d'observation, mais qu'elles ne sont pas à la même échelle, le module de traitement MT doit effectuer une mise en correspondance géométrique avant de procéder à la combinaison de leurs composantes de fréquences spatiales. Plus précisément, en raison des différences de résolution spatiale entre les premier D1 et second D2 dispositifs d'acquisition, l'image brute IM2B délivrée par le second dispositif d'acquisition D2 doit être au moins agrandie (« Zoom »), de manière à être à la même échelle que l'image brute IM1 B délivrée par le premier dispositif d'acquisition D1. De plus, dans le cas général, les caractéristiques géométriques de prise de vue sont a priori différentes pour les dispositifs D1 et D2 (implantations des détecteurs différentes, différences d'angle de visée, etc.). Ces différences induisent des déformations géométriques qui s'ajoutent à l'effet d'échelle qu'il faut corriger avant de procéder à la combinaison.

Par exemple, l'opération de mise en correspondance consiste à extraire des deux images leurs basses fréquences spatiales de manière à les comparer et à déduire la loi d'échelle et éventuellement de déformation à appliquer à l'une pour qu'elle corresponde à l'autre.

Il est important de noter que le module de traitement MT doit effectuer la mise en correspondance géométrique des images, délivrées par les premier D1 et second D2 dispositifs d'acquisition, avant de procéder au filtrage (ou déconvolution). Il est également important de noter que le module de traitement MT peut effectuer une mise en correspondance géométrique suivie du filtrage, sans procéder à la déconvolution si celle-ci n'est pas nécessaire. Par ailleurs, le module de traitement MT peut effectuer une déconvolution suivie du filtrage, sans procéder à la mise en correspondance géométrique si celle-ci n'est pas nécessaire. Enfin, comme indiqué précédemment, lorsque les conditions sont optimales le module de traitement MT peut n'effectuer qu'un filtrage.

Il est important de noter que la déconvolution peut être effectuée avant la combinaison ou bien après.

Une fois les images filtrées, le module de traitement MT peut procéder à leur combinaison (ou fusion).

Cette combinaison consiste dans la plupart des cas à effectuer la somme des images filtrées, notamment lorsqu'une déconvolution a été préalablement effectuée.

Mais, dans certaines circonstances, la combinaison d'images peut être plus complexe. C'est notamment le cas lorsque les images ne peuvent pas être exactement considérées comme provenant d'un même paysage (cohérences temporelle, spatiale et spectrale). Dans cette situation, la combinaison des images ne consiste pas en une simple fusion, telle que décrite ci-avant. Elle requiert ce que l'homme de l'art appelle une restauration. Celle-ci consiste à retrouver de l'information à partir de connaissances *a priori* (par exemple des modèles physiques), des mesures physiques disponibles, même partielles, sous la contrainte de critères mathématiques sur l'image (en général basée sur des considérations de régularité et de positivité des images). Par exemple, le module de traitement MT utilise les images provenant de la source (D2) comme des informations *a priori* alimentant un algorithme de reconstruction des composantes fréquentielles manquantes dans les images délivrées par le premier dispositif d'acquisition D1.

Le résultat de la fusion des images filtrées IM1F et IM2F donne une image finale IMF (délivrée par le module de traitement MT) dont la qualité image est très nettement améliorée du fait de la mise en oeuvre de l'invention.

Le module de traitement MT peut être réalisé sous la forme de circuits électroniques, de modules logiciels (ou informatiques), ou d'une combinaison de circuits et de logiciels.

Grâce à l'invention, il est désormais possible d'obtenir des images de bonne, voire même très bonne, qualité et à résolution spatiale élevée, voire même à haute résolution spatiale, tout en utilisant des instruments d'observation de faible encombrement et donc à forte « dilution ».

L'invention ne se limite pas aux modes de réalisation d'installation d'acquisition d'images décrits ci-avant, seulement à titre d'exemple, mais elle englobe toutes les variantes que pourra envisager l'homme de l'art dans le cadre des revendications ci-après.

Ainsi, dans ce qui précède on a décrit une installation dans laquelle on combinait des images provenant de deux sources d'images, dont au moins une source constituée d'un dispositif d'acquisition à synthèse d'ouverture optique dilué. Mais, l'invention s'applique plus généralement à la combinaison de N images (N étant supérieur ou égal à 2), provenant de N sources d'images différentes, dont l'une au moins est un dispositif d'acquisition à synthèse d'ouverture optique dilué.

Par ailleurs, dans ce qui précède on a décrit des plages d'annulation dans lesquelles la FTM présentait une valeur nulle ou quasiment nulle. Mais, comme indiqué dans la partie introductive, l'invention s'applique également aux situations dans lesquelles la FTM n'est pas identiquement nulle mais suffisamment faible compte tenu du bruit de mesure.

## Revendications

**1.** Installation d'acquisition d'images (I), comprenant au moins un premier dispositif d'acquisition (D1) à synthèse d'ouverture optique à résolution spatiale choisie et comportant une fonction de transfert de modulation présentant au moins une plage d'annulation de fréquences spatiales et propre à délivrer des premières données d'image représentatives d'une zone d'observation, selon des fréquences spatiales en dehors de ladite plage, **caractérisée en ce qu'**elle comprend en outre i) au moins une source (D2) de secondes données d'image de résolution spatiale inférieure à celle dudit premier dispositif (D1) et représentatives sensiblement de ladite zone d'observation, selon des fréquences spatiales appartenant au moins à une partie au moins de ladite plage, et ii) des moyens de traitement (MT) agencés pour combiner lesdites premières et secondes données d'image de manière à délivrer une image de ladite zone d'observation complétée en composantes de fréquences spatiales.

**2.** Installation selon la revendication 1, **caractérisée en ce que** ladite source (D2) délivre des secondes données d'image représentatives sensiblement de ladite zone d'observation, selon des fréquences spatiales comprenant au moins celles de ladite plage d'annulation de sorte que lesdits moyens de traitement (MT) délivrent une image de ladite zone d'observation complétée en terme de fréquences spatiales.

**3.** Installation selon l'une des revendications 1 et 2, **caractérisée en ce que** lesdits moyens de traitement (MT) sont agencés pour filtrer par déconvolution lesdites premières et/ou secondes données d'image et pour les combiner, en fonction de leurs niveaux de fonction de transfert de modulation et/ou de leurs niveaux de bruit.

**4.** Installation selon l'une des revendications 1 à 3, **caractérisée en ce que** lesdits moyens de traitement (MT) sont agencés pour extraire desdites premières et/ou secondes données d'image celles correspondant à une basse résolution spatiale, de manière à faire correspondre géométriquement les images associées avant de procéder audit filtrage et/ou à ladite combinaison.

**5.** Installation selon l'une des revendications 1 à 4, **caractérisée en ce que** ladite source (D2) est une base de données comportant lesdites secondes données d'image(s).

**6.** Installation selon l'une des revendications 1 à 4, **caractérisée en ce que** ladite source (D2) est un second dispositif d'acquisition d'images.

**7.** Installation selon la revendication 6, **caractérisée en ce que** ledit second dispositif d'acquisition d'images (D2) est à résolution spatiale moins fine que ledit premier dispositif d'acquisition d'images (D1).

**8.** Installation selon l'une des revendications 6 et 7, **caractérisée en ce que** ledit second dispositif d'acquisition d'images (D2) est de type multispectral.

**9.** Installation selon l'une des revendications 1 à 8, **caractérisée en ce que** ledit premier dispositif d'acquisition d'images (D1) est de type panchromatique.

**10.** Installation selon l'une des revendications 1 à 9, **caractérisée en ce que** ledit premier dispositif d'acquisition d'images (D1) comprend au moins deux télescopes.

**11.** Installation selon l'une des revendications 1 à 10, **caractérisée en ce que** lesdits premier (D1) et second (D2) dispositifs d'acquisition d'images sont installés sensiblement en un même lieu.

**12.** Installation selon la revendication 11, **caractérisée en ce que** lesdits premier (D1) et second (D2) dispositifs d'acquisition sont installés sur un même engin spatial communiquant avec lesdits moyens de traitement (MT).

**13.** Installation selon l'une des revendications 1 à 11, **caractérisée en ce que** lesdits premier (D1) et second (D2) dispositifs d'acquisition sont installés sur des engins spatiaux différents communiquant avec lesdits moyens de traitement (MT).

**14.** Installation selon l'une des revendications 12 et 13, **caractérisée en ce que** lesdits moyens de traitement (MT) sont installés sur l'un desdits engins spatiaux.

**15.** Installation selon l'une des revendications 12 et 13, **caractérisée en ce que** lesdits moyens de traitement (MT) sont installés dans une station au sol agencée pour communiquer par voie d'ondes avec chaque engin.

**16.** Installation selon l'une des revendications 12 à 15, **caractérisée en ce que** chaque engin spatial est un satellite d'observation.

## Claims

**1.** Image-acquisition installation (I), comprising at least a first optical aperture synthesis acquisition device (D1) with chosen spatial resolution and comprising a modulation transfer function having at least one spatial frequency cancellation range and capable of delivering first image data representative of an observation zone, according to spatial frequencies outside the said range, **characterized in that** it also comprises i) at least one source (D2) of second image data of spatial resolution less than that of the said first device (D1) and substantially representative of the said observation zone, according to spatial frequencies belonging at least to at least a portion of the said range, and ii) processing means (MT) arranged to combine the said first and second image data so as to deliver an image of the said observation zone supplemented in spatial frequency components.

**2.** Installation according to Claim 1, **characterized in that** the said source (D2) delivers second image data substantially representative of the said observation zone, according to spatial frequencies comprising at least those of the said cancellation range so that the said processing means (MT) deliver an image of the said observation zone supplemented in terms of spatial frequencies.

**3.** Installation according to one of Claims 1 or 2, **characterized in that** the said processing means (MT) are designed to filter by deconvolution the said first and/or second image data and to combine them, according to their levels of modulation transfer function and/or their noise levels.

**4.** Installation according to one of Claims 1 to 3, **characterized in that** the said processing means (MT) are arranged to extract from the said first and/or second image data those corresponding to a low spatial resolution, so as to geometrically match the associated images before proceeding with the said filtering and/or the said combination.

**5.** Installation according to one of Claims 1 to 4, **characterized in that** the said source (D2) is a database comprising the said second image data.

**6.** Installation according to one of Claims 1 to 4, **char-**

**acterized in that** the said source (D2) is a second image acquisition device.

7. Installation according to Claim 6, **characterized in that** the said second image acquisition device (D2) has a less detailed spatial resolution than the said first image acquisition device (D1).

8. Installation according to one of Claims 6 or 7, **characterized in that** the said second image acquisition device (D2) is of the multispectral type.

9. Installation according to one of Claims 1 to 8, **characterized in that** the said first image acquisition device (D1) is of the panchromatic type.

10. Installation according to one of Claims 1 to 9, **characterized in that** the said first image acquisition device (D1) comprises at least two telescopes.

11. Installation according to one of Claims 1 to 10, **characterized in that** the said first image acquisition device (D1) and second image acquisition device (D2) are installed substantially in one and the same place.

12. Installation according to Claim 11, **characterized in that** the said first acquisition device (D1) and second acquisition device (D2) are installed on one and the same spacecraft communicating with the said processing means (MT).

13. Installation according to one of Claims 1 to 11, **characterized in that** the said first acquisition device (D1) and second acquisition device (D2) are installed on different spacecraft communicating with the said processing means (MT).

14. Installation according to one of Claims 12 or 13, **characterized in that** the said processing means (MT) are installed on one of the said spacecraft.

15. Installation according to one of Claims 12 or 13, **characterized in that** the said processing means (MT) are installed in a station on the ground arranged to communicate by wave channel with each craft.

16. Installation according to one of Claims 12 to 15, **characterized in that** each spacecraft is an observation satellite.

**Patentansprüche**

1. Bilderfassungsanlage (I), die mindestens eine erste Erfassungsvorrichtung (D1) mit optischer Apertursynthese mit gewählter räumlicher Auflösung und mit einer Modulationsübertragungsfunktion enthält, die mindestens einen Unterdrückungsbereich räumlicher Frequenzen hat und geeignet ist, für eine Beobachtungszone repräsentative erste Bilddaten zu liefern, gemäß räumlichen Frequenzen außerhalb des Bereichs, **dadurch gekennzeichnet, dass** sie außerdem i) mindestens eine Quelle (D2) von zweiten Bilddaten, deren räumliche Auflösung geringer ist als diejenige der ersten Vorrichtung (D1) und die im Wesentlichen für die Beobachtungszone repräsentativ sind, gemäß räumlichen Frequenzen, die zumindest zu mindestens einem Teil des Bereichs gehören, und ii) Verarbeitungsmittel (MT) enthält, die eingerichtet sind, um die ersten und zweiten Bilddaten so zu kombinieren, dass ein um Komponenten räumlicher Frequenzen vervollständigtes Bild der Beobachtungszone geliefert wird.

2. Anlage nach Anspruch 1, **dadurch gekennzeichnet, dass** die Quelle (D2) zweite Bilddaten liefert, die im Wesentlichen für die Beobachtungszone repräsentativen sind, gemäß räumlichen Frequenzen, die mindestens diejenigen des Unterdrückungsbereichs enthalten, so dass die Verarbeitungsmittel (MT) ein Bild der Beobachtungszone liefern, das im Hinblick auf räumliche Frequenzen vervollständigt ist.

3. Anlage nach einem der Ansprüche 1 und 2, **dadurch gekennzeichnet, dass** die Verarbeitungsmittel (MT) eingerichtet sind, um durch Entfaltung die ersten und/oder zweiten Bilddaten zu filtern und um sie in Abhängigkeit von ihren Modulationsübertragungsfunktions-Pegeln und/oder ihren Rauschpegeln zu kombinieren.

4. Anlage nach einem der Ansprüche 1 bis 3, **dadurch gekennzeichnet, dass** die Verarbeitungsmittel (MT) eingerichtet sind, um aus den ersten und/oder zweiten Bilddaten diejenigen zu extrahieren, die einer niedrigen räumlichen Auflösung entsprechen, um die vereinten Bilder geometrisch in Übereinstimmung zu bringen, ehe die Filterung und/oder die Kombination durchgeführt wird.

5. Anlage nach einem der Ansprüche 1 bis 4, **dadurch gekennzeichnet, dass** die Quelle (D2) eine Datenbank ist, die die zweiten Bilddaten enthält.

6. Anlage nach einem der Ansprüche 1 bis 4, **dadurch gekennzeichnet, dass** die Quelle (D2) eine zweite Bilderfassungsvorrichtung ist.

7. Anlage nach Anspruch 6, **dadurch gekennzeichnet, dass** die zweite Bilderfassungsvorrichtung (D2) eine weniger feine räumliche Auflösung als die erste Bilderfassungsvorrichtung (D1) hat.

8. Anlage nach einem der Ansprüche 6 und 7, **dadurch gekennzeichnet, dass** die zweite Bilderfassungsvorrichtung (D2) vom multispektralen Typ ist.

9. Anlage nach einem der Ansprüche 1 bis 8, **dadurch gekennzeichnet, dass** die erste Bilderfassungsvorrichtung (D1) vom panchromatischen Typ ist.

10. Anlage nach einem der Ansprüche 1 bis 9, **dadurch gekennzeichnet, dass** die erste Bilderfassungsvorrichtung (D1) mindestens zwei Teleskope enthält.

11. Anlage nach einem der Ansprüche 1 bis 10, **dadurch gekennzeichnet, dass** die erste (D1) und die zweite (D2) Bilderfassungsvorrichtung im Wesentlichen am gleichen Ort installiert sind.

12. Anlage nach Anspruch 11, **dadurch gekennzeichnet, dass** die erste (D1) und die zweite (D2) Erfassungsvorrichtung im gleichen Raumfahrzeug installiert sind, das mit den Verarbeitungsmitteln (MT) in Verbindung steht.

13. Anlage nach einem der Ansprüche 1 bis 11, **dadurch gekennzeichnet, dass** die erste (D1) und die zweite (D2) Erfassungsvorrichtung in unterschiedlichen Raumfahrzeugen installiert sind, die mit den Verarbeitungsmitteln (MT) in Verbindung stehen.

14. Anlage nach einem der Ansprüche 12 und 13, **dadurch gekennzeichnet, dass** die Verarbeitungsmittel (MT) in einem der Raumfahrzeuge installiert sind.

15. Anlage nach einem der Ansprüche 12 und 13, **dadurch gekennzeichnet, dass** die Verarbeitungsmittel (MT) in einer Bodenstation installiert sind, die eingerichtet ist, um über Wellen mit jedem Fahrzeug zu kommunizieren.

16. Anlage nach einem der Ansprüche 12 bis 15, **dadurch gekennzeichnet, dass** jedes Raumfahrzeug ein Beobachtungssatellit ist.

FTM

FIG.1

Z1          Z2

O

P1          P4          I

D1

P2          P3

O'

P'                          MT

D2

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Signal Analysis. **PAPOULIS A.** Electrical & Electronical Engineering Series. McGraw-Hill, 1987, 431